# EUROPEAN PATENT APPLICATION

(11) **EP 0 555 567 A1**
(43) Date of publication of application: **18.08.1993**
(21) Application number: 92301083.9
(22) Date of filing: 10.02.1992
(51) Int. Cl.: B29C 45/17

(54) **Metal mold for an injection molding**

(71) Applicant: SANKYO ENGINEERING CO. LTD., Ootsuki-shi Yamanashi (JP)
(72) Inventor: Nakamura, Susumu, Ootsuki-shi, Yamanashi (JP); Tamura, Masatasa, Ootsuki-shi, Yamanashi (JP)
(74) Representative: Votier, Sidney David

(57) **Abstract**

The present invention relates to an improved metal mold for an injection molding which is capable of eliminating installation of basic members constituting the main part of the base holder.

To this end, according to the present invention, the metal mold for an injection molding is formed in such a manner that a stationary base holder (1) and a movable base holder (2) thereof include respectively an installation plate (11,21), a pair of right and left holders (12,13,22,23), a stopper plate (14,24) and so on which are integrally formed together into a casting block as a unit, thereby omitting an assembly operation of the main body for assembling the parts manufactured as a separate part in advance.

Accordingly, the main body part is no longer required to form engaging holes for inserting bolts and knock pins for assembling these separately manufactured parts. By this arrangement, spaces utilized for cutting the main body part or for installing parts are automatically increased, thereby increasing flexibility in designing main body part of base holder. Furthermore, since bolts or knock pins are eliminated, the installation of other parts constituting the base holder can be facilitated.

## Description

### BACKGROUND OF THE INVENTION

### Field of the Invention

The present invention relates to a metal mold for an injection molding which includes a pair of metal molds comprised or a stationary metal mold and a movable metal mold to constitute a matrix, and more particularly to a metal mold for an injection molding wherein its molding portion is formed in a cassette configuration so as to be installed on a base holder.

### Description of the Prior Art

Conventionally, this kind of base holder has an installation plate, a pair of right and left holders, and a stopper each precut as a member in each of a stationary side and a movable side. These members are assembled by means of bolts and knock pins and, in turn, a plurality of parts such as a guide pin, a bush, a clamp and so on are installed thereon. That is, there was no base holder constituting a main body part integrally formed as a unit in the conventional art.

In the case that each member constituting this main body part is installed by bolts or knock pins, these bolts or knock pins are likely to interfere with other parts during the installation work of the other parts. And also, it was required in designing or manufacturing a metal mold to keep some mandatory spaces such as a precutting space for the installation plate, the right and left holders, and the stopper or an installation space for installing said plurality of parts such as the guide pin, the bush, the clamp and so on.

Therefore, such mandatory spaces for precutting or installation invade into a space utilized for a main body. Thus, cutting operation or parts installation with respect to the main body was not so freely carried out due to above restrictions.

### SUMMARY OF THE INVENTION

It is therefore an object of the present invention, in order to solve the aforementioned problems and disadvantages encountered in the art, to provide an improved metal mold for an injection molding which is capable of omitting installation of basic members constituting the main part of the base holder.

It is an another object of the present invention to provide an improved metal mold for an injection molding in which there is provided a space for carrying out the cutting operation or parts installation with respect to the main body relatively freely. Furthermore, the installation work efficiency for assembling parts is largely improved simply by omitting bolts or knock pins.

The purposes described above can be realized, according to the present invention, in such a manner that a main body part including an installation plate, a pair of right and left holders, a stopper plate and so on is integrally casted as a unit, thereby omitting an assembly operation of the main body for assembling the parts manufactured as a separate part in advance as is common in the conventional metal mold for an injection molding.

Accordingly, the main body part is no longer required to form engaging holes for inserting bolts and knock pins for assembling these separately manufactured parts. By this arrangement, spaces utilized for cutting the main body part or for installing parts are automatically increased, thereby increasing flexibility in designing main body part of base holder. Furthermore, since bolts or knock pins are eliminated, the installation of other parts constituting the base holder can be facilitated.

The above and other objects, new features and advantages of the present invention will become apparent from the following detailed description which is to be read in conjunction with the accompanying drawings. However, the drawings are merely illustrative, and not restrictive. Therefore, the scope of the present invention is not limited to the disclosure of the accompanying drawings.

### BRIEF DESCRIPTION OF THE DRAWINGS

Fig. 1 is a perspective view showing a base block for a stationary base holder constituting a metallic mold for an injection molding in accordance with one embodiment of the present invention; and
Fig. 2 is a perspective view showing a base block for a movable base holder constituting a metallic mold for an injection molding in accordance with one embodiment of the present invention.

### DETAILED DESCRIPTION OF THE PREFERRED EMBODIMENTS

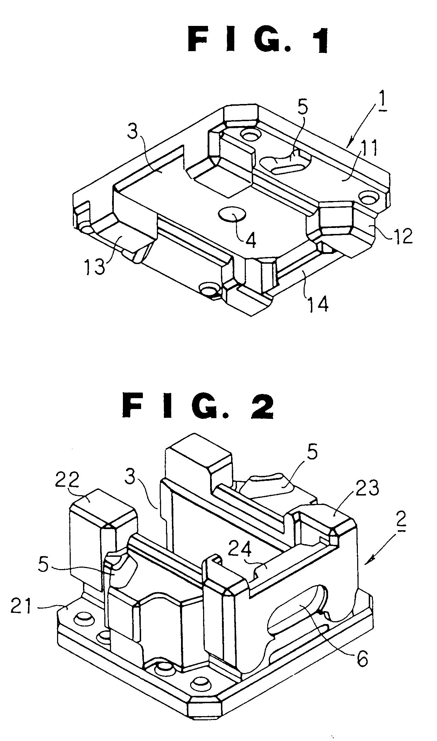

Hereinafter, referring now to the accompanying drawings, a preferred embodiment of the present invention is explained in more detail. Figs. 1 and 2 show one embodiment of a metallic mold for an injection molding in accordance with the present invention. The metallic mold for an injection molding includes a stationary base holder 1 and a movable base holder 2. In a condition that the stationary base holder 1 and the movable base holder 2 are coupled, a molding cassette (not shown) comprised of a cavity block and a core block is detachably installed therein.

The stationary base holder 1 includes an installation plate 11, a pair of right and left holder portions 12, 13, and a stopper plate 14 which are integrally formed into one casting block as a unit. The right and left holder portions 12, 13 and the stopper plate 14 form a coupling portion 3 for a molding cassette. On the installation plate 11 there are integrally formed a locating ring portion 4 at its central portion and a pair of crank receiving portions 5 at both end portion thereof.

In the same way, the movable base holder 2 includes an installation plate 21, a pair of right and left holder portions 22, 23, and a stopper plate 24 which are integrally formed into one casting block as a unit. The right and left holder portions 22, 23 and the stopper plate 24 form a coupling portion 3 for a molding cassette. A reference numeral 6 denotes a cavity for reducing weight of the movable base holder.

The stationary base holder 1 and the movable base holder 2 are respectively formed in a fundamental configuration so as to fit to a guide mechanism, a clamp mechanism, and a sliding mechanism each installed thereon. These stationary base holders 1 and 2 are subjected to cutting operation, as occasion demands such that they need to fit to parts to be installed.

The casting for forming a block can be carried out through any of an aluminum alloy casting, an FC casting, a cast steel, a copper alloy casting, a stainless casting, ductile casting and so on, so as to obtain a desired rigidity, a desired thermal durability, and a desired elasticity in accordance with the configuration of the molding product or its usage.

As the base holder of a metal mold for an injection molding in accordance with the present invention is constituted as described in the foregoing description, it is possible to eliminate the installation of basic parts composing the main body part of the base holder. Furthermore, the main body part is no longer required to form engaging holes for inserting bolts and knock pins for assembling the separated parts. By this arrangement, spaces utilized for cutting the main body part or for installing parts are automatically increased, thereby increasing flexibility in designing main body part of base holder. Moreover, since bolts or knock pins are eliminated, the installation of other parts constituting the base holder can be facilitated.

As this invention may be embodied in several forms without departing from the spirit of essential characteristics thereof, the present embodiment is therefore illustrative and not restrictive, since the scope of the invention is defined by the appending claims rather than by the description preceding them, and all changes that fall within meets and bounds of the claims, or equivalence of such meets and bounds are therefore intended to embraced by the claims.

## Claims

1. A metal mold for an injection molding which includes a pair of stationary metal mold and movable metal mold so as to constitute a matrix, said metal mold comprising:
a stationary base holder including an installation plate, a pair of right and left holders, and a stopper plate which are integrally formed together into one casting block as a unit; and
a movable base holder including an installation plate, a pair of right and left holders, and a stopper plate which are integrally formed together into one casting block as a unit.
